(19) Europäisches Patentamt / European Patent Office / Office européen des brevets

(11) **EP 1 249 275 B1**

(12) **EUROPÄISCHE PATENTSCHRIFT**

(45) Veröffentlichungstag und Bekanntmachung des Hinweises auf die Patenterteilung:
**11.07.2007   Patentblatt 2007/28**

(51) Int Cl.:
*B01J 23/38* (2006.01)     *C10K 3/04* (2006.01)
*C01B 3/58* (2006.01)     *H01M 8/06* (2006.01)
*B01J 23/52* (2006.01)

(21) Anmeldenummer: **01109243.4**

(22) Anmeldetag: **14.04.2001**

(54) **Katalysator und Verfahren zur Entfernung von Kohlenmonoxid aus einem Reformatgas, und Verfahren zur Herstellung des Katalysators**

Catalyst and method for the removal of carbon monoxide from a reformate gas and method for the preparation of the catalyst

Catalyseur et procédé d'élimination du monoxyde de carbone du gaz de reformage, et procédé de préparation du catalyseur

(84) Benannte Vertragsstaaten:
**AT BE CH CY DE DK ES FI FR GB GR IE IT LI LU MC NL PT SE TR**

(43) Veröffentlichungstag der Anmeldung:
**16.10.2002   Patentblatt 2002/42**

(73) Patentinhaber: **Umicore AG & Co. KG**
**63457 Hanau-Wolfgang (DE)**

(72) Erfinder:
• **Roos,Meike,Dr.**
  **63599 Biebergemünd (DE)**
• **Baumann,Frank,Dr.**
  **63755 Alzenau (DE)**
• **Adam,Frank**
  **63579 Freigericht (DE)**
• **Andersch,Stefan**
  **63579 Horbach (DE)**
• **Wieland,Stefan,Dr.**
  **63069 Offenbach (DE)**

(74) Vertreter: **Weinberger, Rudolf**
**Vossius & Partner**
**Postfach 86 07 67**
**81634 München (DE)**

(56) Entgegenhaltungen:
**EP-A- 0 764 466**          **WO-A-97/43212**
**FR-A- 2 771 310**

**Beschreibung**

Die vorliegende Erfindung betrifft einen Katalysator und ein Verfahren zur Entfernung von Kohlenmonoxid aus einem Reformatgas. Die vorliegende Erfindung betrifft ferner ein Verfahren zur Herstellung des erfindungsgemäßen Katalysators.

Zur Verminderung der Emissionen durch Verbrennungsmotoren gibt es Bestrebungen, die Verbrennungsmotoren durch einen elektrischen Antrieb zu ersetzen, wobei die dazu benötigte elektrische Energie von Brennstoffzellen zur Verfügung gestellt werden soll. Als Energielieferant werden Polymerelektrolyt-Brennstoffzellen (PEM-Brennstoffzellen) favorisiert, die mit Wasserstoff als Brennstoff betrieben werden. Es ist geplant, den benötigten Wasserstoff an Bord des Fahrzeugs durch Dampfreformierung von Benzin, Dieselkraftstoff, Methanol oder anderen Kohlenwasserstoffen zu erzeugen.

Reformatgase enthalten neben dem gewünschten Wasserstoff noch Kohlenmonoxid, Kohlendioxid und Wasserdampf. Kohlenmonoxid ist ein starkes Gift für die in den Brennstoffzellen eingesetzten Platin-Katalysatoren und muß deshalb über mehrere Reinigungsstufen möglichst weitgehend aus dem Reformat entfernt werden. Nach der eigentlichen Dampfreformierung wird das Reformat daher gewöhnlich erst über eine Hochtemperatur-Shift-Stufe (HTS) und dann über eine Niedertemperatur-Shift-Stufe (LTS) geleitet. Das Reformat verläßt diese Stufe gewöhnlich mit einem Gehalt an Kohlenmonoxid von etwa 1 Vol.-% und einer Temperatur zwischen 200 und 250 °C.

Der restliche CO-Gehalt des Reformates nach der LTS-Stufe muß weiter herabgesetzt werden, da selbst CO-tolerante Platin/Ruthenium-Katalysatoren nur Konzentrationen von etwa 100 Vol.-ppm Kohlenmonoxid vertragen. Angestrebt werden daher restliche CO-Gehalte im Reformat von unter 50 Vol.-ppm. Zur Erreichung dieses Zieles wurde schon vielfach das Verfahren der präferentiellen Oxidation (PROX) vorgeschlagen. Gemäß diesem Verfahren wird das Kohlenmonoxid an einem Katalysator selektiv zu Kohlendioxid oxidiert. Ein wichtiger Parameter für die präferentielle Oxidation ist die sogenannte Luftzahl λ. Es handelt sich hierbei um das auf stöchiometrische Bedingungen normierte molare $O_2$/CO-Verhältnis. Bei stöchiometrischer Zusammensetzung des Reaktionsgemisches ist die Luftzahl λ = 1. Es enthält dann 1 Mol Sauerstoff und 2 Mol Kohlenmonoxid, das heißt λ kann aus den molaren Anteilen des Reaktionsgemisches wie folgt berechnet werden:

$$\lambda = 2 \cdot \frac{x \, \text{Mol} \, O_2}{y \, \text{Mol} \, CO},$$

wobei x die Anzahl der Mole Sauerstoff und y die Anzahl der Mole CO im Reaktionsgemisch bezeichnen.

Seit langem bekannt ist die hohe Aktivität von hochdispersem Gold auf oxidischen Trägermaterialien für die Oxidation von Kohlenmonoxid bei gleichzeitig nur geringer Aktivität für die Oxidation von Wasserstoff. Es sind jedoch nur wenige Untersuchungen bekannt, die den Einsatz solcher Katalysatorsysteme für die Entfernung von Kohlenmonoxid aus Reformatgasen betreffen, die als Brennstoff für die Versorgung von PEM-Brennstoffzellen vorgesehen sind und deren restliche CO-Gehalte daher 50 Vol.-ppm nicht übersteigen dürfen.

Die bekannt gewordenen Untersuchungen wurden zumeist mit Gasgemischen durchgeführt, die nur annähernd ein Methanolreformat nachbilden. Zumeist handelte es sich um Gasgemische mit etwa 75 Vol.-% Wasserstoff, 1 Vol.-% Kohlenmonoxid und 1 bis 2,5 Vol.-% Sauerstoff in einer Stickstoffmatrix. Durch Untersuchungen in solchen Gasgemischen lassen sich zwar mechanistische und kinetische Erkenntnisse zur Funktionsweise des Katalysators gewinnen, doch erlauben sie kaum Rückschlüsse auf das Verhalten eines entsprechenden Katalysators bei der präferentiellen Oxidation von Kohlenmonoxid in realen Reformatgasen, die stets auch Kohlendioxid und Wasserdampf enthalten. Durch den Kohlendioxidgehalt realer Reformatgase kann es zu einer umgekehrten Wassergas-Shift-Reaktion kommen, die unter Verbrauch von Wasserstoff zur Bildung von Kohlenmonoxid und Wasser führt.

Gemäß diesen Untersuchungen zeigen Katalysatoren aus hochdispersem Gold auf Übergangsmetalloxiden wie zum Beispiel Manganoxid, Titanoxid, Cobaltoxid, Nikkeloxid und α-$Fe_2O_3$ in Temperaturbereichen von unter 0 °C bereits vollständigen Umsatz von CO zu $CO_2$. Bei Temperaturen über 0 °C setzt in Konkurrenz zur CO-Oxidation die Oxidation von Wasserstoff ein, die insbesondere bei der Entfernung von CO aus Reformatgasen unerwünscht ist. Außerdem wird bei einer Arbeitstemperatur von 80 °C insbesondere für das System Au/α-$Fe_2O_3$ eine umgekehrte Wassergas-Shift-Reaktion beobachtet, das heißt ein Anstieg des CO-Gehaltes durch die Reaktion des gewünschten Reaktionsproduktes $CO_2$ mit dem in hohen Mengen anwesenden Wasserstoff zu Wasser und CO. Die hohe Variabilität im Arbeitstemperaturbereich dieser Katalysatorsysteme kann in gewissem Rahmen durch die Wahl der Präparationsbedingungen gesteuert werden: Katalysatoren, die durch die Cofällung von Gold und Übergangsmetalloxid hergestellt werden, eignen sich für den Einsatz bei tiefen Temperaturen, während eine Herstellung durch Imprägnierung eines Übergangsmetalloxids mit einer Goldlösung und anschließender Calcination zu Katalysatoren führt, die bei über 60 °C die gewünschte Oxidationsaktivität für CO aufweisen.

Bei der Entfernung von CO aus Reformatgasen für die Brennstoffversorgung von PEM-Brennstoffzellen muß sich der optimale Arbeitspunkt des vorgesehenen Katalysators nach dem geplanten Einsatzbereich des PROX-Reaktors richten. Hierfür gibt es zwei Optionen: Zum einen ist es denkbar, den PROX-Reaktor hinter einem Tieftemperatur-Wassergas-Shift-Reaktor anzuordnen, der bei Temperaturen von 200 bis 300 °C arbeitet. Dann sollte die Arbeitstemperatur des PROX-Katalysators zwischen 180 und 250 °C liegen. Keines der bislang beschriebenen goldhaltigen Katalysatorsysteme arbeitet in diesem Temperaturbereich mit ausreichender Selektivität. Zum anderen wäre der Einsatz unmittelbar vor der PEM-Brennstoffzelle mit einer Arbeitstemperatur von 80 °C denkbar. Hierfür eignet sich nur der beschriebene Au/$\alpha$-Fe$_2$O$_3$-Katalysator. Für diesen Katalysator werden CO-Restgehalte von 30 Vol.-ppm angegeben. Allerdings werden dabei keine Aussagen zur Verweilzeit des Reaktionsgases am Katalysator gemacht.

Ein in der WO 99/16546 beschriebener, goldhaltiger Katalysator soll sich für den Einsatz bei Temperaturen bis zu 100 °C eignen. Dieser Katalysator enthält 0,1 bis 2,5 % Gold und ein reduzierbares Übergangsmetalloxid (zusammen maximal 6 % der Katalysatormasse) auf einem oxidischen Trägermaterial (30 bis 70 % CeO$_2$, 5 bis 25 % TiO$_2$ und 5 bis 25 % ZrO$_2$). Er setzt bei einer Raumgeschwindigkeit von 60.000 h$^{-1}$ 1 Vol.-% CO in Luft vollständig um. Allerdings werden zu diesem System keinerlei Aussagen über die Selektivität des Katalysators in Gegenwart von Wasserstoff gemacht.

Die FR 2771310 beschreibt einen bimetallischen Katalysator, der neben Gold noch ein Platingruppenmetall (Pd, Pt, Rh, Ru oder Ir) enthält. Als Träger wird ein Mischoxid auf der Basis von Ceroxid verwendet. Angaben zur Arbeitstemperatur und zur Umsatzleistung bei der Oxidation von Kohlenmonoxid fehlen in der Offenlegungsschrift.

Die US 5,895,772 offenbart einen Katalysator für höhere Arbeitstemperaturen. Er enthält ein Edelmetall (Au, Pt, Pd, Rh oder Ag), bevorzugt Gold, und ein Übergangsmetalloxid in Spinellstruktur (Co$_3$O$_4$ oder Fe$_3$O$_4$) auf einem CeO$_2$/ZrO$_2$-Träger. Zur Erhöhung der Alterungsstabilität wird der Träger mit einem Oxid der Elemente der zweiten Hauptgruppe des Periodensystems, einem Lanthandioxid und Siliciumdioxid dotiert, wobei die Dotierung 2 bis 10 Gew.-% der Gesamtmasse des Katalysators betragen soll. Dieser Pulverkatalysator kann dann auf einen Tragkörper aufgebracht werden.

Für Arbeitstemperaturen zwischen 250 und 500 °C enthält der Katalysator 0,5 Gew.-% Gold, 19,5 Gew.-% Cobalt und 70 Gew.-% ZrO$_2$/CeO$_2$. Er erreicht einen CO-Umsatz von 100 %. Bei einer Dotierung mit 5 Gew.-% Lanthanoxid und 5 Gew.-% Neodymoxid verschiebt sich der optimale Arbeitsbereich auf 300 bis 700°C. Allerdings fehlen in der Patentschrift wesentliche Angaben zur Zusammensetzung des verwendeten Reformatgases und der Raumgeschwindigkeit, so daß die Eignung des Katalysators für die präferentielle Oxidation von Kohlenmonoxid in Reformatgasen nicht ausreichend beurteilt werden kann.

Zusammenfassend bleibt festzuhalten, daß die meisten goldhaltigen Katalysatorsysteme zwar eine hohe Aktivität für die CO-Oxidation bei einer bis 60 °C geringen Aktivität gegenüber der Wasserstoffoxidation aufweisen, daß aber gerade die untersuchten Temperaturbereiche unterhalb von 60 °C für Anwendungen bei der präferentiellen Oxidation von CO zur Reinigung von Reformatgasen für PEM-Brennstoffzellensysteme viel zu gering sind. Selbst eine Kopplung direkt an die PEM-Brennstoffzelle erfordert eine Arbeitstemperatur von mindestens 80 °C. In den geforderten Temperaturbereichen werden Gold-Katalysatoren jedoch in der Regel unselektiv und verbrauchen zuviel Wasserstoff, wenn sie nicht völlig deaktivieren.

Ruthenium-Katalysatoren auf oxidischen Trägermaterialien wurden vor allem für den Einsatz zur Entfernung von CO aus Reformatgasen des Methanols entwickelt, wobei als Reinigungsreaktion neben der selektiven Oxidation von CO die selektive Methanisierung von CO ausgenutzt wurde.

So beschreibt die EP 0 787 679 A1 unter anderem ein zweistufiges Verfahren, das in der ersten Stufe das Katalysatorsystem Ru/RuO$_x$ (2 bis 4 Gew.-%) auf TiO$_2$/Al$_2$O$_3$ zur selektiven Methanisierung bei Temperaturen bis maximal 200 °C nutzt, während die sich in einer zweiten Stufe anschließende selektive Oxidation von restlichem CO an einem Platin-Katalysator auf TiO$_2$ und Al$_2$O$_3$ durchgeführt wird. Mit der Kombination dieser beiden Stufen werden restliche CO-Gehalte von < 50 Vol.-ppm erzielt.

Der Einsatz eines Ruthenium-Katalysators zur selektiven Methanisierung in dieser Anwendung weist darauf hin, daß mit dieser — nicht eigentlich erwünschten, weil Wasserstoff verbrauchenden — Nebenreaktion beim Einsatz von Ruthenium-Katalysatoren für die präferentielle Oxidation grundsätzlich zu rechnen ist. Leider machen die meisten Patentdokumente, die entsprechende Sachverhalte zum Inhalt haben, keine Angaben zur Selektivität insbesondere bezüglich des restlichen Kohlenwasserstoffgehaltes.

So beschreibt EP 0 650 923 A1 einen Katalysator mit 0,44 Gew.-% Ru auf Al$_2$O$_3$, der in einem Arbeitsbereich von 90 bis 120 °C bei einem Reaktionsdruck von 4 bar den CO-Gehalt des Edukt-Gases (1 Vol.-% CO, 10 Vol.-% H$_2$O, 1 Vol.-% CH$_3$OH, ca. 67 Vol.-% H$_2$, ca. 22 Vol.-% CO$_2$) bei einer Luftzahl von $\lambda$ = 4 auf < 40 ppm verringert, gibt jedoch nicht an, ob ein nennenswerter Anteil des CO durch Methanisierung umgesetzt wird.

WO 00/17097 hat ein Katalysatorsystem zum Gegenstand, das ebenfalls auf der katalytischen Wirkung von Ru (0,5 %) auf $\alpha$-Al$_2$O$_3$ beruht. Durch den Einsatz des $\alpha$-Al$_2$O$_3$ mit einer Oberfläche von 3 bis 25 m$^2$/g wird der Arbeitsbereich auf 120 bis 160 °C (bevorzugt 130 °C) heraufgesetzt. Der CO-Gehalt in einem synthetischen Methanolreformat (0,5 Vol.-% CO, 0,5 Vol.-% O$_2$, 74 Vol.-% H$_2$, 19 Vol.-% CO$_2$, 6 bis 7 Vol.-% H$_2$O) wird bei $\lambda$ = 2 auf unter 50 ppm reduziert.

Verringert man den Ru-Gehalt auf die Hälfte und setzt stattdessen 0,125 % Pt zu, so verschiebt sich der ideale Arbeitspunkt auf Temperaturen um 180°C bei gleichbleibenden Leistungen im Vergleich zu einem reinen Ruthenium-Katalysator.

Nachteil dieser Katalysatoren ist, daß sie vor dem Einsatz zunächst in Luft bei 400 °C, dann in einem Gemisch von 25 Vol.-% $H_2$ in Stickstoff bei 550 °C aktiviert werden müssen. Nach diesem Prozeß muß der Reaktor unter $H_2/N_2$ zunächst langsam auf die optimale Arbeitstemperatur abgekühlt werden, bevor mit der Umsetzung des Reformats begonnen werden kann.

Eine hohe Aktivität für PROX bei gutem Selektivitätsverhalten wird dem System 0,5 % Ru auf $Al_2O_3$ in (S. H. Oh, R. M. Sinkevitch, *J. Catal.* (1993) 254-262) bescheinigt,

wobei zur Prüfung ein Gasgemisch mit 0,85 Vol.-% $H_2$, 900 ppm CO und 800 ppm $O_2$ (Das entspricht einer Luftzahl $\lambda$ = 1,8) in einer Stickstoffmatrix eingesetzt wurde, das die tatsächliche Gaszusammensetzung eines Reformatgases nur unzureichend widerspiegelt. Der Katalysator zeigte vollständigen CO-Umsatz im Arbeitsbereich 100 bis 300 °C bei einem $H_2$-Umsatz von unter 3 % der eingesetzten Menge bei einer sorgfältig gewählten Steuerung der Sauerstoffzufuhr. Der Verlust des Wasserstoffes wurde auf dessen Oxidation zu Wasser als Nebenreaktion zurückgeführt.

Einen anderen oxidischen Träger, nämlich Zeolith A mit Na, K, Ca oder Mg als kationischer Spezies, nutzt EP 0 764 466 A2. Als katalytische aktive Komponenten werden hier die Edelmetalle Pt, Pd, Ru, Au, Rh und Ir bzw. Legierungen derselben, also auch die Kombination Ru/Au eingesetzt.

Die Katalysatoren wurden unter einem synthetischen Methanol-Reformat (75 Vol.-% $H_2$, 1 Vol.-% CO, 24 Vol.-% $CO_2$) bei hohen Verweilzeiten (Raumgeschwindigkeit = 2.000 $h^{-1}$) und Luftzahlen von 3,5 bis 4 untersucht und wiesen in einem Arbeitsbereich von 50 bis 150 °C vollständigen CO-Umsatz auf. Wie hoch der Umsatz von CO bei den für automobile Anwendungen interessanten hohen Durchsätzen bei Raumgeschwindigkeiten zwischen 10.000 und 30.000 $h^{-1}$ ist, kann aufgrund der in der Offenlegungsschrift angegebenen Daten nicht beurteilt werden. Weiterhin werden keine Angaben zur Selektivität des Katalysators gemacht.

Zusammenfassend bleibt festzuhalten, daß Ruthenium-Katalysatoren auf oxidischen Trägern, insbesondere $Al_2O_3$, sich zwar grundsätzlich zur Entfernung von CO aus Reformatgasen bei Arbeitstemperaturen von 80 bis 120 °C, beziehungsweise 180 bis 250 °C (je nach Formulierung) eignen, daß jedoch bei Einsatz von reinem Ruthenium immer mit einem Verlust von Wasserstoff durch Methanisierung von CO gerechnet werden muß. Dies belegen auch Testergebnisse der Erfinder, wonach ein Katalysator mit 1,6 Gew.-% Ru auf einem mit $TiO_2$ dotierten $Al_2O_3$-Träger und einem monolithischen Tragkörper bereits unterhalb von 100 °C Methan produziert, wobei der Methangehalt im Produktstrom mit steigender Temperatur deutlich ansteigt.

Aufgabe der vorliegenden Erfindung ist es, einen Katalysator und ein Verfahren für die Entfernung von Kohlenmonoxid aus Reformatgasen anzugeben, welcher in einem Arbeitstemperaturbereich zwischen 80 und 120 °C (Tieftemperatur-PROX) und zwischen 120 und 250 °C (Hochtemperatur-PROX) eine hohe Aktivität und Selektivität besitzt.

Diese Aufgabe wird durch einen Katalysator gelöst, der auf einem Trägermaterial Gold und Ruthenium in einem Gewichtsverhältnis zwischen 5:1 und 1:5 enthält, wobei das Trägermaterial ein aktives Aluminiumoxid mit einer spezifischen Oberfläche von mehr als 50 $m^2/g$ ist.

Mit der Kombination der Eigenschaften von Ruthenium und Gold als katalytisch aktiven Komponenten auf einem geeigneten Trägermaterial ist es gelungen, Katalysatoren für die präferentielle Oxidation von CO speziell für den entsprechend gewünschten Arbeitstemperaturbereich (80 bis 120 °C für die Tieftemperatur-PROX und 180 bis 250 °C für die Hochtemperatur-PROX) einzustellen.

Die Beladung des Trägermaterials mit Gold und Ruthenium liegt bevorzugt im Bereich zwischen 0,1 und 10 Gew.-%, bezogen auf das Gesamtgewicht des Katalysators. Es wurde gefunden, daß durch die Höhe der Beladung des Trägermaterials mit Gold und Ruthenium der optimale Bereich der Arbeitstemperatur verschoben werden kann. Je höher die Beladung ist, um so weiter verschiebt sich der Temperaturbereich zu niedrigen Temperaturen. Allerdings verschlechtern sich mit zunehmender Beladung die katalytischen Eigenschaften des Katalysators geringfügig. Es wurde gefunden, daß diesem Trend entgegengewirkt werden kann, wenn als Trägermaterial zusätzlich 1 bis 10 Gew.-% Titanoxid, bezogen auf das Gesamtgewicht des Trägermaterials, in physikalischer Mischung mit dem aktivem Aluminiumoxid vorliegen.

Der erfindungsgemäße Katalysator kann zu Tabletten oder Extrudaten verarbeitet werden. Bevorzugt wird er jedoch in Form einer Beschichtung auf einen inerten Tragkörper aufgebracht. Als inerte Tragkörper eignen sich monolithische Wabenkörper aus Keramik oder Metall, offenzellige, keramische oder metallische Schaumkörper, Metallbleche, Wärmetauscherplatten oder unregelmäßig geformte Bauteile.

Zu diesem Zweck wird das in Pulverform vorliegende Trägermaterial in Wasser suspendiert. Zur Verbesserung der Haftung auf dem vorgesehenen Tragkörper kann der Suspension ein Binder zugesetzt werden. Die Korngröße der Feststoffe der Suspension wird dann durch Mahlen auf einen Wert zwischen 2 und 10 $\mu$m eingestellt.

Der Tragkörper kann zum Beispiel durch Tauchen in die Suspension mit dem Trägermaterial beschichtet werden. Bevorzugt sollte die Konzentration der Beschichtung auf dem Tragkörper zwischen 30 und 150 g/l Volumen des Tragkörpers liegen. Nach Trocknen und Calcinieren der Beschichtung kann sie durch Tauchen in eine Lösung von Vorläuferverbindungen des Goldes und Rutheniums mit den katalytisch aktiven Komponenten imprägniert werden. Geeignete Vorläuferverbindungen von Gold und Ruthenium sind zum Beispiel Tetrachlorogoldsäure und Rutheniumtrichlorid.

Das Trocknen der frischen Beschichtung auf dem Tragkörper wird gewöhnlich bei erhöhter Temperatur zwischen 80 und 200 °C vorgenommen. Die anschließende Calcinierung der Beschichtung findet bei Temperaturen zwischen 300 und etwa 600 °C statt. Die Dauer der Calcinierung sollte zwischen 1 bis 10 Stunden betragen. Zur Vermeidung von Temperaturschocks kann die Calcinierung auch in mehreren Stufen mit steigenden Temperaturen vorgenommen werden. Die konkrete Ausgestaltung der Calcinierbedingungen hat nur einen vernachlässigbaren Einfluß auf die Aktivität des späteren Katalysators, so daß sie lediglich den Erfordernissen zur Herstellung einer haftfesten Beschichtung genügen müssen. Auch die Calcinierung nach Imprägnierung der Beschichtung mit den katalytisch aktiven Komponenten kann in weiten Grenzen variiert werden, solange die Temperatur während der Calcinierung einen Wert von 600 °C nicht wesentlich überschreitet. Die maximale Temperatur von 600 °C stellt sicher, daß die Oxidbeschichtung und auch die katalytisch aktiven Komponenten nicht durch thermische Einflüsse geschädigt werden. Auch die abschließende Reduktion kann in dem weiten Temperaturbereich zwischen 300 und 600 °C vorgenommen werden. Bewährt hat sich eine Reduktionstemperatur von 500 °C für die Dauer von 3 bis 5 Stunden.

Geeignete Tragkörper für die katalytische Beschichtung sind die aus der Autoabgaskatalyse bekannten Wabenkörper aus Keramik (zum Beispiel Cordierit) und Metall. Diese Wabenkörper werden von parallelen Strömungskanälen für das Reaktionsgas durchzogen. Die Dichte dieser Kanäle über den Querschnitt der Wabenkörper wird als Zelldichte bezeichnet. Bevorzugt werden Wabenkörper mit Zelldichten zwischen 50 und 100 $cm^{-2}$ eingesetzt.

Selbstverständlich lassen sich entsprechende Katalysatoren auch auf anderen oxidischen Tragkörpern, z. B. $Al_2O_3$-Pellets präparieren.

Dabei werden $Al_2O_3$-Pellets oder -Extrudate eingesetzt, die gegebenenfalls mit einer Titanlösung vorimprägniert, calciniert und anschließend mit Edelmetalllösung imprägniert, calciniert und reduziert werden können, wobei die Konzentrationen der optionalen Titandotierung und des katalytisch aktiven Edelmetalls reduziert werden müssen, da es sich bei solchen Pelletkatalysatoren um Schalenkatalysatoren handelt. Die tatsächlichen Konzentrationen richten sich dann nach der Dicke der Schale, die ihrerseits davon abhängig ist, ob und wie die $Al_2O_3$-Pellets vorbehandelt werden.

Bei dem Einsatz von Pelletkatalysatoren ist grundsätzlich zu berücksichtigen, daß die Strömungsverhältnisse und damit auch die Umsatzverhältnisse in einer Festbettschüttung grundsätzlich andere sind als in einem monolithischen Katalysator. Für Anwendungen in der Wasserstofferzeugung und -reinigung für ein Brennstoffzellensystem wird daher die Verwendung monolithischer Katalysatoren oder anderer Strukturen auf Tragkörpern mit definierten Strömungskanälen vorgezogen.

Der erfindungsgemäße Katalysator eignet sich hervorragend für Entfernung von Kohlenmonoxid aus Reformatgasen verschiedener Herkunft (Methanol-Reformat, Benzin-Reformat oder Diesel-Reformat). Das Reformat wird dabei mit einer Raumgeschwindigkeit von 5.000 bis 200.000 $h^{-1}$ bei einer Temperatur zwischen 100 und 250 °C über den Katalysator geleitet. Die Luftzahl des Reformates wird vor dem Kontakt mit dem Katalysator durch Zuführen von Sauerstoff auf einen Wert zwischen 1 und 10 erhöht.

Bevorzugt wird das Verfahren in mehreren Stufen durchgeführt, wobei die Zufuhr von Sauerstoff vor jeder Katalysatorstufe so geregelt wird, daß mit abnehmendem Gehalt des Reformates an Kohlenmonoxid die Luftzahl ansteigt und die über alle Verfahrensstufen gemittelte Luftzahl zwischen 1,2 und 4,0 liegt. Die Luftzahl in der ersten Verfahrensstufe wird bevorzugt gleich 1 gewählt.

Die Erfindung wird nun an Hand der einzigen Figur und den folgenden Beispielen näher erläutert. Es zeigt

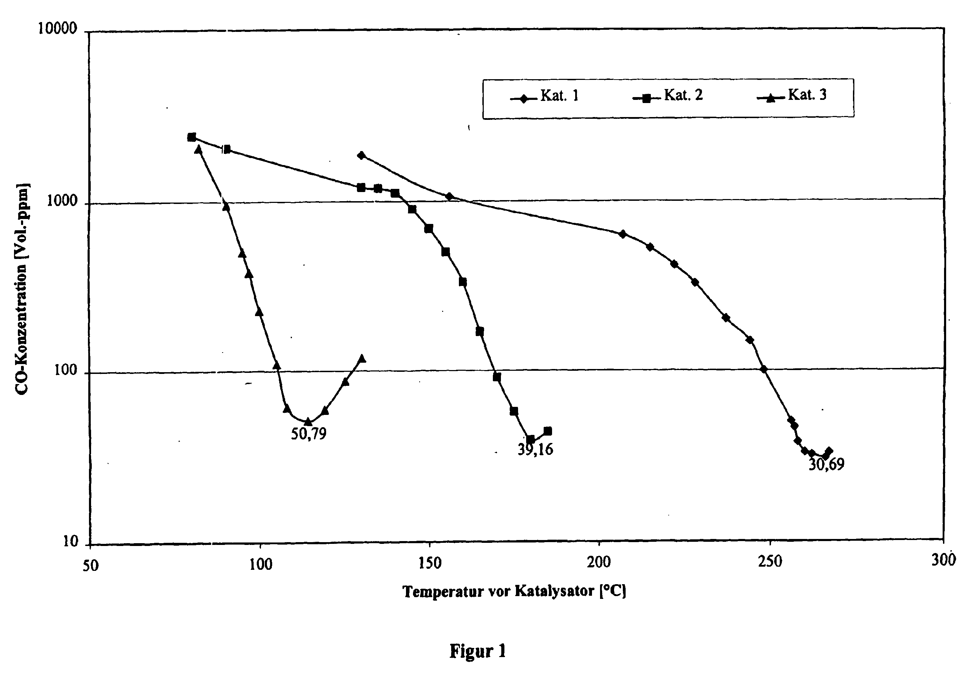

**Figur 1:** Leistungskurven der Ru/Au-Katalysatoren bei GHSV = 10000/h, p = 2 bar (abs.), λ = 4

Als Tragkörper für die Katalysatoren der folgenden Beispiele wurden Wabenkörper aus Cordierit mit einer Zelldichte von 93 $cm^{-2}$ eingesetzt.

## Beispiel 1:

Zur Herstellung eines erfindungsgemäßen Katalysators (Kat. 1) wurde aktives Aluminiumoxid mit einer spezifischen Oberfläche von 140 $m^2$/g in Wasser suspendiert und durch Aufmahlen bis zu einer Korngröße von 3 bis 10 $\mu$m homogenisiert. Die so gebildete Beschichtungssuspension hatte einen Feststoffgehalt von 30 Gew.-%.

Diese Beschichtungssuspension wurde dann auf einen monolithischen Wabenkörper aus Cordierit aufgezogen. Die Beladung des Wabenkörpers betrug nach Trocknung und Calcination der Beschichtung 75 g/l Wabenkörpervolumen. Nach Calcination bei 500 °C für die Dauer von 3 Stunden wurde die Beschichtung durch Tauchen des Wabenkörpers in eine Lösung von Tetrachlorogoldsäure und Rutheniumtrichlorid imprägniert. Nach erneuter Calcination wurde der Katalysator im Formiergasstrom bei einer Temperatur von 500 °C für die Dauer von 2 Stunden reduziert und anschließend chloridfrei gewaschen. Die Beladung des Katalysators mit Gold und Ruthenium betrug jeweils 1,6 Gew.-%, bezogen auf das Gesamtgewicht der Beschichtung.

## Beispiel 2:

Analog zu Beispiel 1 wurde ein weiterer Katalysator (Kat. 2) hergestellt. Der fertige Katalysator enthielt etwa die doppelte Konzentration an Gold und Ruthenium (jeweils 3,13 Gew.-%).

**Beispiel 3:**

Es wurde ein weiterer Katalysator (Kat. 3) analog zu Beispiel 1 hergestellt. Als Trägermaterial wurde eine Mischung von Titandioxid und Aluminiumoxid eingesetzt. Die Oxidmischung enthielt 96 Gew.-% des schon in den vorangegangenen Beispielen verwendeten aktiven Aluminiumoxids und 4 Gew.-% Titandioxid (Anatas) mit einer spezifischen Oberfläche von 40 $m^2$/g. Die Edelmetallbeladung des Katalysators entsprach der von Beispiel 1.

**Anwendungsbeispiel:**

Alle Katalysatoren wurden in einem synthetischen Reformatstrom mit einem Sauerstoffzusatz, der der Luftzahl $\lambda$ = 4 entsprach (56,26 Vol.-% $H_2$, 22,6 Vol.-% $CO_2$, 5,7 Vol.-% $H_2O$, 14,7 Vol.-% $N_2$, 2790 ppm CO, 5580 ppm $O_2$) getestet. In Figur 1 sind die Leistungskurven der genannten Katalysatoren für eine Raumgeschwindigkeit GHSV = 10.000 $h^{-1}$ und p = 2 bar (abs.) aufgetragen.

Mit Kat. 1 erreicht man bei Betriebstemperaturen ab 260 °C restliche CO-Gehalte im Reformat von 35 ppm und darunter. Der Umsatz am optimalen Arbeitspunkt von 266 °C liegt bei 98,9 %.

Der Verlust an Wasserstoff durch Methanisierung und $H_2$-Oxidation wurde durch Messung des gebildeten Methans und des Rest-CO-Gehalts im Produktgasstrom und Umrechnung der nach der präferentiellen Oxidation verbrauchten Menge an $O_2$ in einen äquivalenten $H_2$-Verlust durch Wasserstoffverbrennung ermittelt. Unter Berücksichtigung von Sicherheitsaufschlägen bei der Bestimmung der Methankonzentration gingen nur 1,8 % des eingesetzten Wasserstoffs durch Methanisierung und $H_2$-Oxidation verloren.

Mit Kat. 2 wird bei einem optimalen Arbeitspunkt von 180 °C ein CO-Umsatz von 98,6 % erreicht. Der restliche CO-Gehalt im Reformat liegt dann unterhalb von 40 ppm. Durch Methanisierung und $H_2$-Oxidation gingen 2,1 % des eingesetzten Wasserstoffs verloren.

Mit dem Tieftemperaturkatalysator Kat. 3 wird der CO-Gehalt im Reformat bei 110 bis 120 °C auf 50 bis 60 Vol.-ppm reduziert. Durch Methanisierung und $H_2$-Oxidation gingen 1,5 % des eingesetzten Wasserstoffs verloren.

**Patentansprüche**

1. Katalysator zur Entfernung von Kohlenmonoxid aus einem Reformatgas, wobei
   der Katalysator auf einem Trägermaterial Gold und Ruthenium in einem Gewichtsverhältnis zwischen 5:1 und 1:5 enthält, wobei das Trägermaterial ein aktives Aluminiumoxid mit einer spezifischen Oberfläche von mehr als 50 $m^2$/g ist.

2. Katalysator nach Anspruch 1, wobei
   als Trägermaterial zusätzlich 1 bis 10 Gew.-% Titanoxid, bezogen auf das Gesamtgewicht des Trägermaterials, in physikalischer Mischung mit dem aktiven Aluminiumoxid vorliegen.

3. Katalysator nach Anspruch 1 oder 2, wobei der Katalysator
   0,1 bis 10 Gew.-% Gold und Ruthenium, bezogen auf das Gesamtgewicht des Katalysators, enthält.

4. Katalysator nach einem der vorstehenden Ansprüche, wobei
   der Katalysator in Form einer Beschichtung auf einem inerten Tragkörper aufgebracht ist.

5. Katalysator nach Anspruch 4, wobei
   als inerte Tragkörper monolithische Wabenkörper aus Keramik oder Metall, offenzellige, keramische oder metallische Schaumkörper, Metallbleche, Wärmetauscherplatten oder unregelmäßig geformte Bauteile eingesetzt werden.

6. Verfahren zur Herstellung eines Katalysators nach Anspruch 4 oder 5, wobei
   der inerte Tragkörper mit einer wäßrigen Suspension der Trägermaterialien beschichtet, getrocknet und calciniert wird und danach die Beschichtung mit Gold und Ruthenium unter Verwendung einer Lösung von löslichen Vorläuferverbindungen imprägniert und abschließend getrocknet, calciniert und reduziert wird.

7. Verfahren zur Entfernung von Kohlenmonoxid aus einem Reformatgas durch Überleiten des Reformatgases über einen Katalysator nach einem der Ansprüche 1 bis 5, wobei
   das Reformatgas mit einer Raumgeschwindigkeit von 5.000 bis 200.000 $h^{-1}$ und bei einer Temperatur zwischen 100 und 250 °C über den Katalysator geleitet wird, wobei die Luftzahl des Reformatgases vor dem Kontakt mit dem Katalysator durch Zuführen von Sauerstoff auf einen Wert zwischen 1 und 10 erhöht wird.

8. Verfahren nach Anspruch 7, wobei
   das Verfahren in mehreren Stufen durchgeführt wird, wobei die Zufuhr von Sauerstoff vor jeder Katalysatorstufe so geregelt wird, daß mit abnehmendem Gehalt des Reformatgases an Kohlenmonoxid die Luftzahl ansteigt und die über alle Verfahrensstufen gemittelte Luftzahl zwischen 1,2 und 4,0 liegt.

9. Verfahren nach Anspruch 8, wobei
   die Luftzahl in der ersten Stufe gleich 1 gewählt wird.

## Claims

**1.** A catalyst for removing carbon monoxide from a reformate gas wherein the catalyst contains gold and ruthenium in a ratio by weight of between 5:1 and 1:5 on a support material wherein the support material is an active aluminium oxide having a specific surface area of greater than 50 m$^2$/g.

**2.** The catalyst according to claim 1, wherein 1 to 10 wt.% of titanium oxide based on the total weight of the support material, is additionally present as a support material in a physical mixture with the active aluminium oxide.

**3.** The catalyst according to claim 1 or 2, wherein the catalyst contains 0.1 to 10 wt.% of gold and ruthenium based on the total weight of the catalyst.

**4.** The catalyst according to any one of the preceding claims, wherein the catalyst is applied in the form of a coating on an inert carrier body.

**5.** The catalyst according to claim 4, wherein honeycomb monoliths made of ceramic or metal, open-cell, ceramic or metallic foamed bodies, metal sheetings, heat exchanger plates or irregularly shaped units are employed as inert carrier bodies.

**6.** A process for the preparation of the catalyst according to claim 4 or 5, wherein the inert carrier body is coated with an aqueous suspension of the support materials, dried and calcined, and thereafter the coating is impregnated with gold and ruthenium using a solution of soluble precursor compounds, and finally dried, calcined and reduced.

**7.** A process for removing carbon monoxide from a reformate gas by passing the reformate gas over a catalyst according to any one of claims 1 to 5, wherein the reformate gas is passed over the catalyst with a space velocity of from 5,000 to 200,000 h$^{-1}$ and at a temperature between 100 and 250°C, wherein the air coefficient of the reformate gas prior to the contact with the catalyst is increased to a value between 1 and 10 by supplying oxygen.

**8.** The process according to claim 7, wherein the process is carried out in several steps, wherein the supply of oxygen upstream of each catalyst step is controlled so that the air coefficient increases with decreasing concentration of carbon monoxide in the reformate gas and the air coefficient averaged over all process steps is between 1.2 and 4.0.

**9.** The process according to claim 8 , wherein the air coefficient in the first step is set to 1.

## Revendications

**1.** Catalyseur d'élimination du monoxyde de carbone d'un gaz de reformage, dans lequel le catalyseur contient, sur un matériau support, de l'or et du ruthénium dans un rapport de poids compris entre 5:1 et 1:5, le matériau support étant un oxyde d'aluminium actif présentant une surface spécifique de plus de 50 m$^2$/g.

**2.** Catalyseur selon la revendication 1, dans lequel le matériau support contient en plus 1 à 10 % en poids d'oxyde de titane, par rapport au poids total du matériau support, dans un mélange physique avec l'oxyde d'aluminium actif.

**3.** Catalyseur selon la revendication 1 ou 2, dans lequel le catalyseur contient 0,1 à 10 % en poids d'or et de ruthénium, par rapport au poids total du catalyseur.

**4.** Catalyseur selon l'une des revendications précédentes, dans lequel le catalyseur est appliqué sous forme d'un revêtement sur un corps porteur inerte.

**5.** Catalyseur selon la revendication 4, dans lequel les corps porteurs inertes utilisés sont des corps monolithiques en nids d'abeille en céramique ou en métal, des corps en mousse à cellules ouvertes, céramiques ou métalliques, des tôles métalliques, des plaques d'échangeur de chaleur ou des composants de forme irrégulière.

**6.** Procédé de fabrication d'un catalyseur selon la revendication 4 ou 5, dans lequel le corps porteur inerte est recouvert d'une suspension aqueuse des matériaux supports, séché et calciné, puis le revêtement est imprégné d'or et de ruthénium en utilisant une solution de composés précurseurs solubles, et enfin séché, calciné et réduit.

**7.** Procédé d'élimination du monoxyde de carbone d'un gaz de reformage en redirigeant le gaz de reformage sur un catalyseur selon l'une des revendications 1 à 5, dans lequel le gaz de reformage est dirigé sur le catalyseur à une vitesse dans l'espace de 5 000 à 200 000 h$^{-1}$ et à une température comprise entre 100 et 250°C, le coefficient d'air du gaz de reformage, avant le contact avec le catalyseur, étant augmenté sur une valeur comprise entre 1 et 10 par une amenée d'oxygène.

8.  Procédé selon la revendication 7,
    dans lequel
    le procédé est réalisé dans plusieurs étapes, l'amenée d'oxygène étant régulée avant chaque étape du catalyseur pour que le coefficient d'air augmente lorsque la teneur du gaz de reformage en monoxyde de carbone diminue et le coefficient d'air moyenné sur toutes les étapes de procédé se situe entre 1,2 et 4,0.

9.  Procédé selon la revendication 8,
    dans lequel
    le coefficient d'air est égal à 1 dans la première étape.

**Figur 1**

EP 1 249 275 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9916546 A
- FR 2771310
- US 5895772 A
- EP 0787679 A1
- EP 0650923 A1
- WO 0017097 A
- EP 0764466 A2